# EUROPEAN PATENT APPLICATION

(11) **EP 1 515 220 A2**
(43) Date of publication of application: **16.03.2005**
(21) Application number: 04018411.1
(22) Date of filing: 03.08.2004
(51) Int. Cl.: G06F 1/32

(54) **Method, machine readable storage and system for power management in a gigabit Ethernet chip**

(30) Priority: 12.09.2003 US 502437 P; 08.07.2004 US 887061
(71) Applicant: Broadcom Corporation, Irvine, California 92618-7013 (US)
(72) Inventor: Hwang, Andrew, Irvine, California 92618-7013 (US)
(74) Representative: Jehle, Volker Armin

(57) **Abstract**

Aspects of the invention for managing power in a single chip device (200) may comprise, an internal finite state machine (400) that, while in a communicating state (610), determines from within the single chip device whether a power management status is set and/or whether a first power management event is received. If the power management status is set, the finite state machine may transition from the communicating state to a power management event sent state (614). If the first power management event is received, the finite state machine may transition from the communicating state to a non-communicating state (612). The first power management event may be a turn off power management event. Furthermore, in instances where the power management status is set, it may be cleared, thereby causing the finite state machine to transition back to the communicating state. One or more power management control registers may be utilized for indicating power management status.

## Description

### CROSS-REFERENCE TO RELATED APPLICATIONS/INCORPORATION BY REFERENCE

This application is a continuation-in-part of U.S. application Serial No. 10/629,207 (Attorney Docket No. 13935US02) filed on July 29, 2003.

This application also make reference to, claims priority to and claims the benefit of United States Provisional Application Serial No. 60/502,437 (Attorney Docket No. 15194US01) filed on September 12, 2003.

This application also make reference to:
United States Application Serial No. (Attorney Docket No. 13946US02) filed on July 8, 2004; and
United States Application Serial No. 10/353,440 (Attorney Docket No. 13948US02) filed on January 29, 2003.

The above stated applications are all incorporated herein by reference in their entirety.

### FIELD OF THE INVENTION

Certain embodiments of the invention relate to power management. More specifically, certain embodiments of the invention relate to a method and system for power management in a gigabit Ethernet chip.

### BACKGROUND OF THE INVENTION

As the demand for higher data rates and bandwidth requirements continues to increase, various technologies facilitating transmission rates of the order of about 10 Gigabits and higher are being developed for high-speed network applications. Highspeed digital communication networks over copper and optical fiber are typically used in many network communication and digital storage applications. Ethernet and Fiber Channel, for example, are two widely used communication protocols which continue to evolve in response to an ever increasing need for higher bandwidth in digital communication systems. Accordingly, there is a need to develop various 10 Gigabit networking devices that may facilitate, for example, high-speed serial data applications. The IEEE P802.3ae draft 5 specifications describes the physical layer requirements for 10 Gigabit Ethernet applications and is incorporated herein by reference in its entirety.

The Open Systems Interconnection (OSI) model (ISO standard) was developed to establish standardization for linking heterogeneous computer and communication systems. It describes the flow of information from a software application of a first computer system to a software application of a second computer system through a network medium. The OSI model has seven distinct functional layers including Layer 7: an application layer; Layer 6: a presentation layer; Layer 5: a session layer; Layer 4: a transport layer; Layer 3: a network layer; Layer 2: a data link layer; and Layer 1: a physical layer. Importantly, each OSI layer describes certain tasks which are necessary for facilitating the transfer of information through interfacing layers and ultimately through the network. Notwithstanding, the OSI model does not describe any particular implementation of the various layers.

OSI layers 1 to 4 generally handle network control and data transmission and reception. Layers 5 to 7 may be adapted to handle various application issues. Specific functions of each layer may vary depending on factors such as protocol and interface requirements or specifications that are necessary for implementation of a particular layer. For example, the Ethernet protocol may provide collision detection and carrier sensing in the data link layer. Layer 1, the physical layer, is responsible for handling all electrical, optical, opto-electrical and mechanical requirements for interfacing to the communication media. Notably, the physical layer may facilitate the transfer of electrical signals representing an information bit stream. The physical layer may also provide services such as, encoding, decoding, synchronization, clock data recovery, and transmission and reception of bit streams. In high bandwidth applications having transmission speeds of the order of Gigabits, high-speed electrical, optical and/or electro-optical transceivers may be used to implement this layer.

The proliferation of physical layer devices designed to meet the needs of high speed communication applications will, without a doubt, give rise to new challenges. One challenge pertains to the development of high speed communications devices having optimized power consumption. In this regard, various attempts have been made to provide standardized power management procedures for various network devices and/or applications. For example, the network driver interface specification (NDIS) defines a standardized network application programming interface (API) for network interface cards (NICs). In this regard, the NDIS provides a medium access control (MAC) driver that encapsulates or wraps the complexity and details of a network interface card and provides a common application programming interface for accessing various functions of a network interface card. For example, NDIS provides a standardized API that may be used to access Ethemet-based network interface cards.

NDIS also provides a suite or library of functions, which may be adapted as tools that may be used to access the functionality of a network interface card. The suite or library of functions provided by the NDIS may be utilized by various upper level protocol drivers, thereby reducing the complexity of these upper level drivers. For example, a MAC layer driver or even transmission control protocol/internet protocol (TCP/IP) driver may utilize one or more functions of NDIS suite or library of functions.

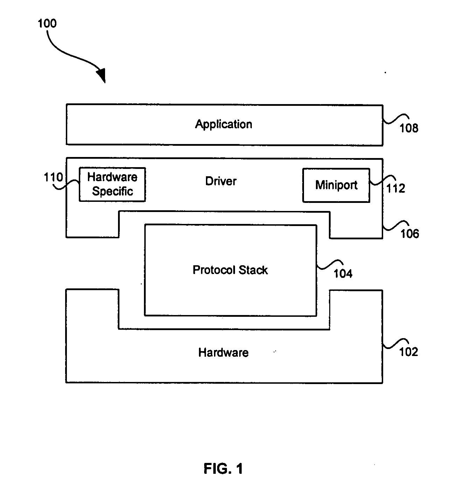

FIG. 1 is a high-level block diagram of an exemplary NDIS architecture 100. Referring to FIG. 1, there is shown a hardware block 102, a protocol stack 104, a driver block 106, and an application block 108.

The hardware block 102 may include the necessary hardware that may be utilized for communicating over a transport medium. Accordingly, the hardware block 102 may include, for example, various integrated circuits and suitable logic that may be adapted to transmit and/or receive signals from a transport medium.

The protocol stack block 104 may be adapted to provide a layered architecture that defines particular functionality and services offered by each layer in the architecture. Specifically, the protocol stack block 104 may be consistent with the layered architecture of the OSI.

The driver block 106 may include a hardware specific driver block 110 and/or a miniport driver block 112. In general, the hardware specific driver block 110 may be adapted to provide platform or hardware specific functionality. In this regard, the use of the hardware specific driver block 110 by non-native applications may be limited and in some instances, some non-native applications may not have the capability to interface with the hardware specific driver block 110. The latter may be particularly true in instances where the hardware specific driver block 110 is proprietary. In general, the miniport driver block 112 may be adapted to provide platform independent functionality such as wrapper functions. In this regard, the miniport driver block 112 may conform to certain standards and may be adapted to provide universal functions, which may be utilized by both native and non-native applications.

The application block 108 may include one or more software applications and/or functions that may be adapted to handle the communication of data received and/or transmitted by the hardware block 102. Applications in the application block 108 may be adapted to utilize the standardized wrapper functions provided by the miniport driver block 112 and/or the proprietary drivers provided by the hardware specific driver block 110. Applications in the application block 108 may utilize various functions provided by either of the hardware specific driver block 110 or the miniport driver block 112 to handle connections, process messages received by the hardware block 102 and messages to be transmitted by the hardware block 102.

For power management purposes, a network controller, such as an Ethernet medium access control (MAC) device, may be required to generate a power management event upon the receipt of certain network events. Those events may include, but are not limited to, network status changes, a management request, receipt of a network wakeup frame and receipt of a magic packet. In general, a wakeup frame may be any specified frame, also called an interested frame, that may be used to wakeup a system.

Particularly, a network wakeup event may be a hardware or software generated request, which may be used to initiate a change in power state of a system or system component or entity. For example, a network wakeup event may be utilized for changing the state of a system and/or device from a lowered powered state to a fully powered state, or vice versa. In general, network wakeup events may be generated external to a network. Exemplary network wakeup frames may include address resolution protocol (ARP) broadcast frames, directed uni-cast frames and NetBIOS broadcast frames.

In some networking applications, depending on the network vendor, some software and/or hardware applications may require the use of a network device capable of recognizing wakeup frames based on pattern matches that may occur anywhere in the first 128 bytes of the frame. Such an implementation may add excessive cost to the hardware required for the network interface controller and/or card (NIC), since additional memory and/or buffers may be required. Furthermore, since additional software programming is required to control the functionality of the network interface card, the programming overhead may further increase the cost associated with the network interface card. Moreover, in Gigabit Ethernet (GbE) wire-speed applications, these associated costs can obviously be prohibitively high. Due to the rapid growth in networking technology, a flexible power management solution is required that will not only meet current power management requirements, but will also be expandable so that it will be applicable to more advanced future networking applications.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain aspects of the invention may be found in a method and system for managing power in a single chip device. Aspects of the method for managing power in a single chip device may comprise, determining internally from within the single chip device while in a communicating state, whether a power management status is set and/or whether a first power management event is received. If the power management status is set, a transition may be made from the communicating state to a power management event sent state. If the first power management event is received, a transition may be made from the communicating state to a non-communicating state. The first power management event may be a turn off power management event. In instances where the power management status is set, it may be cleared, thereby resulting in a transition back to the communicating state.

In response to receiving a second turn off power management event while in the power management event sent state, a transition may be made to a link reactivation state. In response to receiving the second turn off power management event while in the power management event sent state, wake signaling may be initiated and/or an acknowledgement may be sent to a host. While in the link reactivation state, a transition may be made to the power management event sent state whenever sufficient power is received. While in the non-communicating state, a transition may be made to the link reactivation state when the power management status is set. If a timeout occurs while in the power management event state, then at least one power management event may be resent. A transition may be made from the non-communicating state back to the communicating state whenever sufficient power is received.

Another embodiment of the invention may provide a machine-readable storage, having stored thereon, a computer program having at least one code section for managing power in a single chip device. The at least one code section may be executable by a machine, thereby causing the machine to perform the steps as described above for managing power in a single chip device.

Aspects of the system for managing power in a single chip device may comprise, a finite state machine that, while in a communicating state, determines internally from within the single chip device whether a power management status is set and/or whether a first power management event is received. If the power management status is set, the finite state machine may transition from the communicating state to a power management event sent state. If the first power management event is received, the finite state machine may transition from the communicating state to a non-communicating state. The first power management event may be a turn off power management event. Furthermore, in instances where the power management status is set, it may be cleared, thereby causing the finite state machine to transition back to the communicating state. The system may comprise at least one power management control register that may be utilized for indicating the power management status.

In response to receiving a second turn off power management event while in the power management event sent state, the finite state machine may transition to a link reactivation state. Additionally, in response to receiving the second turn off power management event while in the power management event sent state, wake signaling may be initiated and/or an acknowledgement may be sent to a host by the finite state machine. While in the link reactivation state, the finite state machine may transition to the power management event sent state whenever sufficient power is received. Also, while in the non-communicating state, the finite state machine may transition to the link reactivation state when the power management status is set. If a timeout occurs while in the power management event sent state, the finite state machine may be adapted to resend at least one power management event. The finite state machine may transition from the non-communicating state back to the communicating state whenever sufficient power is received.

According to an aspect of the invention, a method for managing power in a single chip device is provided, the method comprising:
while in a communicating state, determining internally from within the single chip device at least one of:
   whether a power management status is set; and
   whether a first power management event is received;
if said power management status is set, transitioning to a power management event sent state; and
if said first power management event is received, transitioning to a non-communicating state.

Advantageously, said first power management event is a turn off power management event.

Advantageously, the method further comprises clearing said set power management status.

Advantageously, the method further comprises transitioning back to said communicating state from said power management event sent state upon said clearing of said set power management status.

Advantageously, the method further comprises in response to receiving a second turn off power management event while in said power management event sent state, transitioning to a link reactivation state.

Advantageously, the method further comprises in response to receiving said second turn off power management event while in said power management event sent state, at least one of:
initiating wake signaling; and
sending an acknowledgement to a host.

Advantageously, the method further comprises transitioning back to said power management event sent state from said link reactivation state upon receiving sufficient power.

Advantageously, the method further comprises transitioning from said non-communicating state to said link reactivation state when said power management status is set

Advantageously, the method further comprises resending at least one power management event if a timeout occurs while in said power management event sent state.

Advantageously, the method further comprises transitioning from said non-communicating state back to said communicating state upon receiving sufficient power.

According to an aspect of the invention, a machine-readable storage is provided having stored thereon, a computer program having at least one code section for managing power in a single chip device, the at least one code section being executable by a machine for causing the machine to perform steps comprising:
while in a communicating state, determining internally from within the single chip device at least one of:
   whether a power management status is set; and
   whether a first power management event is received;
if said power management status is set, transitioning to a power management event sent state; and
if said first power management event is received, transitioning to a non-communicating state.

Advantageously, said first power management event is a turn off power management event.

Advantageously, the machine-readable storage further comprises code for clearing said set power management status.

Advantageously, the machine-readable storage further comprises code for transitioning back to said communicating state from said power management event sent state upon said clearing of said set power management status.

Advantageously, the machine-readable storage further comprises code for transitioning to a link reactivation state in response to receiving a second turn off power management event while in said power management event sent state.

Advantageously, the machine-readable storage further comprises code for at least one of initiating wake signaling and sending an acknowledgement to a host in response to receiving said second turn off power management event while in said power management event sent state.

Advantageously, the machine-readable storage further comprises code for transitioning back to said power management event sent state from said link reactivation state upon receiving sufficient power.

Advantageously, the machine-readable storage further comprises code for transitioning from said non-communicating state to said link reactivation state when said power management status is set

Advantageously, the machine-readable storage further comprises code for resending at least one power management event if a timeout occurs while in said power management event sent state.

Advantageously, the machine-readable storage further comprises code for transitioning from said non-communicating state back to said communicating state upon receiving sufficient power.

According to an aspect of the invention, a system for managing power in a single chip device is provided, the system comprising:
a finite state machine that, while in a communicating state, internally determines from within the single chip device at least one of:
   whether a power management status is set; and
   whether a first power management event is received;
if said power management status is set, said finite state machine transitioning to a power management event sent state; and
said finite state machine transitioning to a non-communicating state, if said first power management event is received.

Advantageously, said first power management event is a turn off power management event.

Advantageously, said finite state machine clears said set power management status.

Advantageously, said finite state machine transitions back to said communicating state from said power management event sent state upon said clearing of said set power management status.

Advantageously, said finite state machine transitions to a link reactivation state in response to receiving a second turn off power management event while in said power management event sent state.

Advantageously, said finite state machine at least one of initiates wake signaling and sends an acknowledgement to a host in response to receiving said second turn off power management event while in said power management event sent state.

Advantageously, said finite state machine transitions back to said power management event sent state from said link reactivation state upon receiving sufficient power.

Advantageously, said finite state machine transitions from said non-communicating state to said link reactivation state when said power management status is set

Advantageously, said finite state machine resends at least one power management event if a timeout occurs while in said power management event sent state.

Advantageously, said finite state machine transitions from said non-communicating state back to said communicating state upon receiving sufficient power.

Advantageously, the system further comprises at least one power management control register for indicating said power management status.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a high-level block diagram of an exemplary NDIS architecture.

FIG. 2 is a block diagram of an exemplary Ethernet transceiver module which may be coupled to a MAC controller, which may be utilized in connection with power management, in accordance with an embodiment of the invention.

FIG. 3 is a block diagram of an integrated dual port gigabit Ethernet controller chip that may be utilized in connection with power management in accordance with an embodiment of the invention.

FIG. 4 is an exemplary power management state transition diagram that may be utilized in connection with an embodiment of the invention.

FIG. 5 is an flow diagram illustrating exemplary link power states or link states and corresponding transitions that may occur during the course of link operations, in accordance with an embodiment of the invention.

FIG. 6 is a block diagram of an exemplary PM-PME state machine, which may be utilized in connection with power management in a single chip device in accordance with an embodiment of the invention.

FIG. 7 is a block diagram of an exemplary system that may be utilized in connection with power management in a single chip device in accordance with an embodiment of the invention.

### DETAILED DESCRIPTION OF THE INVENTION

Aspects of the present invention relate to providing power management in an Ethernet controller chip. In particular, certain embodiments relate to a single chip device for a LAN on motherboard (LOM) and/or a network Interface Card (NIC) applications that may contain, for example, an integrated 10/100/1000BaseT transceiver and an on-chip power circuit controller and wake-on LAN (WOL) power switching circuit. The 10/100/1000BaseT transceiver may be referred to as a gigabit transceiver and may comprise a gigabit physical (PHY) layer device or a gigabit PHY (GPHY). The single chip device may also be adapted to support a plurality of legacy power management modes and may comprise a gigabit Ethernet (GbE) peripheral component interconnect (PCI) controller/interface, PCI-X, or peripheral component interconnect Express controller/interface, for example.

United States Patent Application Serial No. 10/340,408 (Attorney Docket No. 13910US02) discloses an exemplary gigabit PHY that may be utilized in connection with the present invention, which application is incorporated herein by reference in its entirety.

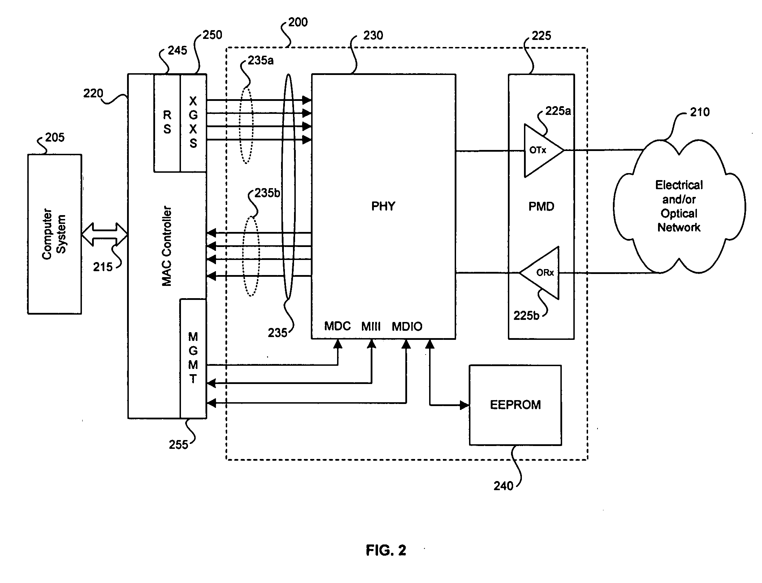

FIG. 2 is a block diagram of an exemplary Ethernet transceiver module 200 which may be coupled to a MAC controller 220, which may be utilized in connection with power management, in accordance with an embodiment of the invention. Referring to FIG. 2, there is illustrated a computer system 205, a medium access control (MAC) controller 220, a bus controller interface 215, an electrical and/or optical network 210, a PHY device 230, an electrically erasable programmable read only memory (EEPROM) 240, a physical media dependent (PMD) transmitter 225a and a PMD receiver 225b. The physical media dependent (PMD) transmitter 225a and physical media dependent (PMD) receiver 225b may be integrated into a single PMD 225 such as a chip or an integrated circuit (IC). Transceiver module 200 may be an integrated device, which may include the PHY device 230, the EEPROM 240, the optical transmitter 225a and the optical receiver 225b. Computer system 205 may interface with MAC controller 220 through bus controller interface 215 and may communicate with the electrical and/or optical network 210 through the transceiver module 200. The computer system 205 may be adapted to function as a host system. The bus controller interface 215 may be a PCI, PCI-X, PCI Express interface, or other bus controller interface. Notwithstanding, the invention is not limited in this regard. In a case where the PHY is adapted to interface with a copper plant, the OTx 225a and ORx 225b are not present.

Transceiver module 200 may be configured to communicate, including transmit and receive, data between computer system 205 via the controller interface 215 and electrical, optical or electro-optical network 210. The data transmitted and/or received may be formatted in accordance with the well-known OSI protocol standard. The OSI model partitions operability and functionality into seven distinct and hierarchical layers. Generally, each layer in the OSI model is structured so that it may provide a service to the immediately higher interfacing layer. For example, layer 1 may provide services to layer 2 and layer 2 may provide services to layer 3. The data link layer, layer 2, may include a MAC layer whose functionality may be handled by a MAC controller 220. In this regard, MAC controller 220 may be configured to implement the well-known IEEE 802.3 Ethernet protocol.

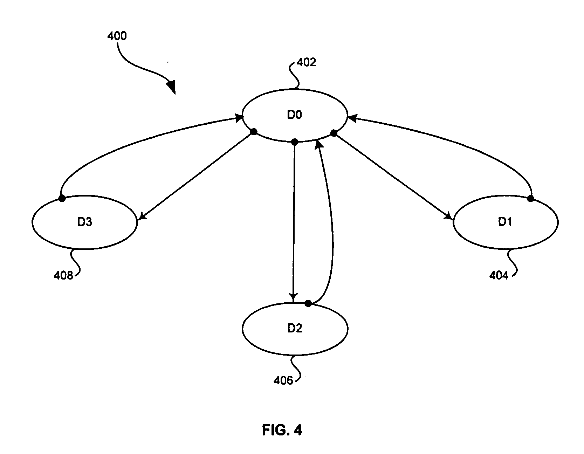

In the embodiment of FIG. 4, the computer system 205 may represent layer 3 and above, the MAC controller 220 may represent layer 2 and above and the transceiver module 200 may represent layer 1. The computer system 205 may be configured to build the five highest functional layers for data packets that are to be transmitted over the optical network 210. Since each layer in the OSI model may provide a service to the immediately higher interfacing layer, the MAC controller 220 may provide the necessary services to the computer system 205 to ensure that packets are suitably formatted and communicated to the transceiver module 200. During transmission, each layer may add its own header to the data passed on from the interfacing layer above it. However, during reception, a compatible device having a similar OSI stack may strip off the headers as the message passes from the lower layers up to the higher layers.

The transceiver module 200 may be configured to handle all the physical layer requirements, which may include, but is not limited to, packetization, data transfer and serialization/deserialization (SERDES) in instances where PHY 230 may be adapted to communicate with an optical network. Transceiver module 200 may operate at a plurality of data rates, which may include 10 Mbps, 100 Mbps, 1 Gbps and 10 Gbps, for example. Data packets received by the transceiver module 200 from MAC controller 220 may include data and header information for each of the above six functional layers. The transceiver module 200 may be configured to encode data packets that are to be transmitted over the optical medium of the optical network 210. The transceiver module 200 may also be configured to decode data packets received from the electrical or optical network 210.

The MAC controller 220 may interface with the PHY 230 through, for example, an Ethernet attachment unit interface (XAUI) 235. The XAUI 235 may be a low pin count device having a self-clocked bus, which directly evolved from lower data rate protocols. The XAUI may function as an extender interface for a media independent interface (XMGII). In this regard, MAC controller 220 may also include an XGMII extender sub-layer (XGXS) interface 250 and a reconciliation sub-layer (RS) interface 245. MAC controller 220 may also include an integrated link management (MGMT) interface 255 that may facilitate communication between MAC controller 220 and a management data input/output (MDIO) interface or management interface II (MII) of the PHY 230.

The XAUI 235 may be configured to utilize a plurality of serial data lanes on each of its receive 235a and transmit 235b interfaces to achieve compatible GbE operational speeds. In accordance with the embodiments of FIG. 2, XAUI 235a may be configured to transmit data from the MAC controller 220 to the PHY 230. Additionally, XAUI 235b may be configured to transmit data from the PHY 230 to the MAC controller 220. The PHY 230 may be configured to operate in one or more of a plurality of communication modes, where each communication mode may implement a different communication protocol. These communication modes may include, but are not limited to, GbE, fibre channel and other similar protocols. The PHY 230 may be configured to operate in a particular mode of operation upon initialization or during operation.

The PMD 225 may include at least one PMD transmitter 225a and at least one PMD receiver 225b. In operation, PMD 225 may be configured to receive data from and transmit data to the electrical and/or optical network 210. The PMD transmitter 225a may transmit data originating from the computer system or host 205 over the electrical and/or optical network 210. The PMD receiver 225b may receive data destined for computer system 205 from the optical network 210 and transmit the data to the computer system 205. The PMD 225 may also be configured to function as an electro-optical interface. In this regard, electrical signals may be received by PMD transmitter 225a and transmitted in a format such as optical signals over the optical network 210. Additionally, optical signals may be received by PMD receiver 225b and transmitted as electrical signals to the computer system 205.

The transceiver module 200 may also include an EEPROM 240. The PHY 230 may be coupled to EEPROM 240 through an interface such as a serial interface or bus. EEPROM 240 may be programmed with information, which may include parameters and/or code that may effectuate the operation of the PHY 230. The parameters may include configuration data and the code may include operational code such as software and/or firmware, but the information is not limited in this regard.

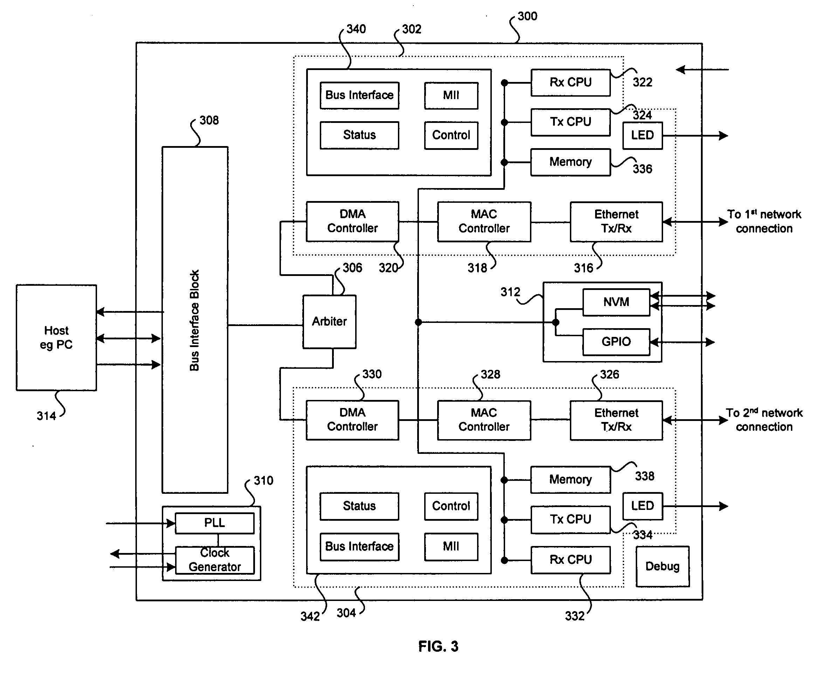

FIG. 3 is a block diagram of an integrated dual port gigabit Ethernet controller chip that may be utilized in connection with power management in accordance with an embodiment of the invention. Referring to FIG. 3, there is shown an integrated dual port gigabit Ethemet controller chip 300 coupled to a host system 314. FIG. 3 also illustrates a first Ethemet controller 302, a second Ethernet 304, an arbiter 306, shared resources including an NVM and a GPIO collectively referenced as 312 and a timing block including a PLL and a clock generator collectively referenced as 310. The first Ethernet transceiver block or PHY 316 of the first transceiver 302 may be coupled to a first network connection and the second Ethernet transceiver block or PHY 304 may be coupled to a second network connection.

The first Ethernet controller 302 may include an RxCPU 322, a TxCPU 324, a memory 336, an Ethernet transceiver or PHY 316, a MAC controller 318, and a DMA controller 320. The second Ethernet controller 304 may include an RxCPU 332, a TxCPU 334, a memory 338, an Ethernet transceiver or PHY 326, a MAC controller 328, and a DMA controller 330.

The host system or host may be a personal computer (PC). The integrated dual port gigabit Ethernet controller chip 300 may be integrated within a network card or it may be integrated within a motherboard of the host 314 in a case where the host is a PC. The bus interface block 308 may be adapted to couple the integrated dual port gigabit Ethernet controller chip 300 to the host system 314. In one aspect of the invention, the bus interface block 308 may be a PCI, PCI-X or PCI Express interface that may allow the integrated dual port gigabit Ethernet controller chip 300 to communicate through a PCI, PCI-X or PCI Express bus of the host system 314.

In 10BASE-T mode, Manchester encoding may be performed on a data stream and transmitted on one pair in a twisted pair cable. A multimode transmit DAC may perform pre-equalization for about 100 meters of CAT 3 cable, for example. In 100BASE-TX mode, the integrated dual port gigabit Ethernet controller chip may transmit a continuous data stream on one pair in the twisted pair cable, and receive a continuous data stream on another pair of conductors. The MAC may provide nibble-wide or 4-bit data which may be encoded into 5-bit code-groups and inserted into the transmit data stream. The transmit packet may be encapsulated by replacing the first two preamble nibbles with a start of stream delimiter (SSD) or /J/K codes and appending an end of stream delimiter or /T/R codes to the end of the packet. When the MAC indicates a transmit error, the transmit error code-group (/H) may be sent in place of the corresponding data code-group. The transmitter may repeatedly send the idle code-group between packets. The encoded data stream may be serialized and then scrambled by, for example, a stream cipher block. The scrambled data may then be encoded into MLT3 signal levels.

In 1000BASE-T mode, the integrated dual port gigabit Ethernet controller chip may simultaneously transmit and receive a continuous data stream on all four twisted pairs on the CAT 5 cable on the active port. When a packet is pending transmission from the MAC, byte-wide data from the MAC may be scrambled, trellis encoded into a 4-dimensional code-group, for example, a PAM5 symbol on each of the four twisted pairs, and inserted into the transmit data stream. The transmit packet may be encapsulated by replacing the first two bytes of preamble with a start-of-stream delimiter and appending an end-of-stream delimiter to the end of the packet. When the MAC indicates a transmit error during a packet, a transmit error code-group may be sent in place of the corresponding data code-group. The transmitter may send idle code-groups or carrier extend code-groups between packets. The MAC may use carrier extension to separate packets within a multiple-packet burst. Carrier extend error may be indicated by replacing the transmit data input with a suitable code such as 0×1F during carrier extension.

In 10BASE-T mode, Manchester decoding may be performed on the data stream. Accordingly, a received data stream, following equalization and clock recovery, may be converted from MLT3 to serial NRZ data. The stream cipher block may descramble the NRZ data. The descrambled data may then be deserialized and aligned into, for example, 5-bit code-groups. The 5-bit code-groups may be decoded into 4-bit data nibbles. The start-of-stream delimiter may be replaced with preamble nibbles and the end of stream delimiter and idle codes may be replaced with a suitable code such as 0×00. The decoded data may then be provided to the MAC. When an invalid code-group is detected in the data stream, a receive error may be indicated to the MAC. The receive error signal also asserts when the link fails or when the descrambler loses lock during packet reception.

In 1000BASE-T mode, the receive data stream may pass through a Viterbi decoder and descrambler, for example, and be translated back into byte wide data. The start of stream delimiter is replaced with preamble bytes and the end of stream delimiter and idle codes may be replaced with a suitable code such as 0×00. Carrier extend codes may be replaced with a suitable code such as 0x0F or 0x1 F. The decoded data may then be provided to the MAC. When an invalid code-group is detected in the data stream, the integrated dual port gigabit Ethernet controller chip may provide an error condition to the MAC. The integrated dual port gigabit Ethernet controller chip may also indicate a receive error when receiving carrier extend code-groups, or when the local receiver status becomes unreliable during packet reception.

Packet data in the received data path of the first Ethernet controller 302 may be received by the Rx CPU 322 for advanced processing. After the Rx CPU 322 has completed advanced processing of the packet data, the Rx CPU 322 may place the processed packet data back in the data path for normal processing and DMA activity between a host and the integrated dual port gigabit Ethernet controller chip. In this regard, received data from the first network connection may be received by the Ethernet transceiver or PHY 316 and processed by the MAC controller 318. The processed data may be buffered in at least a portion of the memory 336, from which it may be transferred to the Rx CPU 322 for advanced packet processing.

Similarly, packet data in the send data path of the first Ethernet controller 302 may be transferred to the Tx CPU 324 for advanced processing. After the Tx CPU 324 has completed advanced processing of the packet data for transmission, the Tx CPU 324 may place the processed packet data back in the data path for normal processing and DMA activity between a host and the integrated dual port gigabit Ethernet controller chip. In this regard, data to be transmitted may be buffered in a portion of the memory 336, from which it may be transferred to the Tx CPU 324 for advanced processing. Data processed by the TX CPU 324 may be buffered in at least a portion of the memory 336 from which it may be transferred to the MAC controller 318 for processing. The processed data from the MAC controller 318 may be transferred to the Ethernet transceiver 316 for transmission over the first network connection.

Packet data in the received data path of the second Ethernet controller 304 may be received by the Rx CPU 332 for advanced processing. After the Rx CPU 332 has completed advanced processing of the packet data, the Rx CPU 332 may place the processed packet data back in the data path for normal processing and DMA activity between the host 314 and the integrated dual port gigabit Ethernet controller chip 300. In this regard, received data from the second network connection may be received by the Ethernet transceiver or PHY 326 and processed by the MAC controller 328. The processed data may be buffered in at least a portion of the memory 338, from which it may be transferred to the Rx CPU 332 for advanced packet processing. Data received from the second network connection may be received by the Ethernet transceiver or PHY 326 and processed by the MAC controller 328. The processed data may be buffered in at least a portion of the memory 338, from which it may be transferred to the Rx CPU 322 for advanced packet processing. Processing of data received from the first network connection by the first Ethernet controller 302 may be independent of the processing of data received from the second network connection by the second Ethernet controller 304.

Similarly, packet data in the send data path of the second Ethernet controller 304 may be transferred to the Tx CPU 324 for advanced processing. After the Tx CPU 324 has completed advanced processing of the packet data for transmission, the Tx CPU 324 may place the processed packet data back in the data path for normal processing and DMA activity between a host and the integrated dual port gigabit Ethernet controller chip. In this regard, data to be transmitted may be buffered in a portion of the memory 336, from which it may be transferred to the Tx CPU 324 for advanced processing. Data processed by the TX CPU 324 may be buffered in at least a portion of the memory 336 from which it may be transferred to the MAC controller 318 for processing. The processed data from the MAC controller may be transferred to the Ethernet transceiver 316 for transmission over the first network connection. Processing of data received from the first network connection by the first Ethernet controller 302 may be independent of the processing of data received from the second network connection by the second Ethernet controller 304.

In operation, the two Ethernet controllers 302, 304 are independently treated and function as two separate ports. For this reason, each of the Ethernet controllers 302, 304 has its own associated register blocks 340, 342 and memories 336, 338 respectively. For illustrative purposes, the first Ethernet controller 302 may be referred to as a first port and the second Ethernet controller 304 may be referred to as a second port. In order to treat these two ports independently and to permit these two ports to share a single bus interface, each port is separately addressable with respect to the bus interface. For illustrative purposes, the bus interface 308 may be regarded as a PCI bus interface and may be PCI, PCI-X or PCI Express. Notwithstanding, to make the ports separately addressable, each port may be assigned a separate and unique function identifier (ID), for example, function zero (0) and function one (1).

In order to access devices through configuration cycles, for example, a combined bus ID and a device ID may be utilized. In this case, however, the combined bus ID and device ID may not suffice to uniquely distinguish the first and the second ports or Ethernet controllers, since the first and the second controllers maintain the same bus ID and device ID. Accordingly, the combined bus ID and device ID along with the unique PCI function ID may serve to uniquely distinguish the first port and the second port. As a result, each port may be separately identified by using the combined bus ID, device ID and function ID. In cases where the bus interface is a PCI interface, a PCI bus ID, PCI ID and a PCI function ID may be utilized to address or distinguish each of the ports.

The integrated dual port gigabit Ethernet controller chip utilizes shared memory resources to, for example, reduce cost, pin count and real estate. Since the resources are shared, the arbiter 306 may be configured to arbitrate access to the shared resources. The arbiter may therefore receive resource access requests, grant access requests, deny access requests and/or arbitrate resource access conflicts. After an access request has been granted or successfully arbitrated for one of the Ethernet controllers 302, 304, the arbiter 306 may acknowledge the access grant or arbitration to the successful Ethemet controller. The arbiter 306 may then facilitate the transfer of information for the successful Ethernet controller to and from the PCI bus interface 308. An arbitration algorithm utilized by the arbiter 306 may be static or it may be dynamically configured depending on, for example, operating conditions.

The arbiter 306 may be adapted to tag data packets for a particular Ethernet controller function in order to distinguish data packets received from or to be transferred to a particular one of the Ethernet controllers 302, 304. For example, the arbiter 306 may be adapted to add a particular identifier such as unique bit pattern to packets originated from the first Ethernet controller 302. Similarly, the arbiter 306 may be adapted to add a different identifier such as a unique bit pattern to packets originated from the second Ethernet controller 304. In this regard, the arbiter may direct and facilitate transfer of packets from a particular PCI process to a particular PCI function.

United States Application Serial No. (Attorney Docket No. 13946US02) discloses an integrated dual port gigabit Ethernet controller chip that may be utilized in connection with the invention and is accordingly incorporated herein by reference in its entirety.

In general, common power management states may include, but are not limited to, D0, D1, D2, and D3. Certain power management states may be designated as mandatory states while others may be designated as optional power management states. The designation of optional and/or mandatory power management states may be implementation dependent and not all of the power management states D0, D1, D2, and D3 have to be utilized. For example, in some systems, D0 and D3 are mandatory power management states and must be supported, while D1 and D2 are optional power management states which do not have to be supported. A power management state may be inactive and accordingly referred to as being cold. A power management state may be active and accordingly referred to as being hot. Hence, there may be corresponding power management states D3hot and D3cold, for example.

Power management state D0 may indicate that a device is powered up and already operational. A device in the D0 power management state may be utilizing full power and providing full functionality to a user.

Power management state D1 may indicate a low power state which may or may not result in loss of a device context. Power management state D1 may be a class specific state. In general, a bus handler or controller may be helpless in preventing devices connected to a bus which may be in power management state D1 from losing their context. In certain applications, no bus transmissions, no receptions and no interrupts may be permitted while a bus is operating in the D1 power management state.

Power management state D2 may also be a class specific state. Power management state D2 may also be a low power state, which may achieve greater power consumption than power management state D1. However, devices coupled to a bus in power management state D2 may lose their contexts under certain conditions. For example, in a case where there is a reduction in power to a bus ending in power management state D2, then some devices connected to the bus may lose some of their context. Accordingly, devices operating in power management state D2 may be configured to continue to operate in the D2 or higher power management state. In certain applications, no bus transmissions, no receptions and no interrupts may be permitted while a bus is operating in the D2 power management state.

Power management state D3 may indicate that a device is off and not operational. In the D3 power management state, all power to a particular device may be lost and the device context may be assumed to be lost. Accordingly, a device driver may be adapted to restore a device's context upon a transition to a D0 state. In certain instances, depending on the application, the D3 power management state may be a default power management state. In cases where wakeup or wake-on-LAN (WOL) may be implemented, states other than the D3 power management state may be the default power management state. In the D1 power management state, no bus transmissions, no receptions and no interrupts may be permitted.

FIG. 4 is an exemplary power management state transition diagram 400 that may be utilized in connection with an embodiment of the invention. Referring to FIG. 4, there is shown various power management states D0, D1, D2, D3 referenced as 402, 404, 406, 408 respectively. If the present power management state is D0, then transitions may occur to any one of power management states D1, D2, and D3. A transition from D0 to any of power management states D1, D2, or D3 may occur when a system enters a sleep mode of operation. In a case where wake may be enabled, the lowest power state from which system wake may be supported may be any one of power management states D1, D2, and D3. In a case where a link may be designated as down, for example after a specified timeout period, then power management state D1, D2, or D3 may be the lowest state in which a device may be able to detect an uplink condition.

A transition from power management state D0 to power management state D3, may be indicative of a network shutdown initiated by the system. Additionally, a transition from power management state D0 to power management state D3, may indicate that the system may have entered sleep mode and wake may not be enabled. Alternatively, the device may be configured to wake from power management state D3. A transition from any one of power management states D1, D2, D3 may be indicative of a wakeup which may be caused by, for example, a wakeup event.

In general, a device driver may be adapted to continuously determine the states of both a bus and any device or devices that may be coupled to the bus. In a case where a device driver receives a power management wakeup event (PWE), the device driver may be adapted to determine what power management state transitions may be permissible. In general, a power management state of a bus may not be lower that the highest state of a device currently connected to the bus. Notwithstanding, a power management wakeup event may accordingly affect this general rule. Assume for example, that a device is in a D2 power management state and configured to wakeup a system using a power management wakeup event. Assume further that a bus to which the device may be coupled can only communicate wakeup events while operating in the D1 state. Although, the bus is in a lower power management state, namely D1, than the power management state of the device, namely D2, the bus may not transition power management states and may remain in the D1 power management state in order to transfer the power management wakeup event.

In accordance with an aspect of the invention, the single chip device for a LAN on motherboard (LOM) and/or a network interface card (NIC) may be adapted to operate in at least one of several power modes. In this regard, various low power modes may be defined and each of these low power modes may be adapted to support a particular operation mode of a chip such as an Ethernet controller chip. Exemplary low power modes may include, but are not limited to, conference room mode, airplane mode, and disabled mode. One or more drivers or power management handlers may be adapted to control the operation of each of the modes.

In conference room mode, the driver may be capable of detecting the absence of alternating current (AC) power. In a the case of a gigabit PHY, for example, upon detection of the absence of AC power, the driver may configure the GPHY to restart auto-negotiation with an advertised speed of 10BaseT only. The driver may continue to restart auto-negotiation thereby incrementing advertised capabilities for each auto-negotiation restart until link presence is detected by the driver. If the driver detects link presence at 10BaseT speed, for example, the driver may change a core clock speed of the gigabit PHY to achieve a desired low power mode.

The airplane mode may be entered when there is a loss of link or alternatively stated, whenever a loss of link status is detected. Upon detecting no energy on the physical medium, the gigabit PHY may enter a "power up on activity" state, whereby the gigabit PHY stays in a low power state until energy is detected. The gigabit PHY may be adapted to periodically transmit link pulses and detect energy. In the "power up on activity" state, the gigabit PHY may continue to drive the management interface II (MII) transmit and receive clocks to the medium access controller (MAC). The gigabit PHY may be adapted to exit the low power state whenever energy is detected on the physical medium.

In accordance with an aspect of the invention, there may be a handshake between the gigabit PHY and MAC core, which may be utilized as an indication to power down the MAC. In this regard, the handshake between the gigabit PHY and MAC core may control powering down of, for example, a dynamic link library (DLL). A signal may be driven high by the gigabit PHY, which notifies the MAC core to switch the core clock to a slower speed, for example 6.25MHz. After the core clock speed has been reduced to a slower speed, the MAC may assert a signal back to the gigabit PHY to allow the PHY to auto power down the dynamic link library. Following reestablishment of a link, a signal may be sent from the gigabit PHY to the MAC core indicating that the MAC core should switch back to a higher clock speed. For example, whenever a link is re-established, a signal from the gigabit PHY to the MAC core may be driven low, thereby causing the MAC core to switch back to the higher clock speed, such as, for example 62.5MHz.

The single chip device may have a dedicated low power pin that may be utilized to configure the single chip device to operate in a low power mode. Notwithstanding, the invention is not so limited, and a general purpose I/O pin may also be utilized to configure the single chip device to operate in a low power mode. In this regard, the single chip device may be optionally powered down by utilizing a defined low power mode pin. Accordingly, the low power mode pin may be asserted, thereby resulting in the single chip device being placed in a mode where it may draw a lower amount of current that it would under normal operation conditions. Upon de-assertion of the low power mode pin, the device may execute, for example, a hard reset. While in this mode, the device may not be able to transmit, receive or respond to PCI transactions.

In accordance with an aspect of the invention, a CardBus and/or PCI card may allow a low power budget of about 70 mA for an un-initialized state of the chip (D0). However, the gigabit PHY alone may draw as much as 54 mA of current even at 10BaseT with no traffic. In order to meet the power requirement, the single chip device may not be able to support out-of-box (OOB) wake on LAN (WOL) at any speed while remaining CardBus compliant. However, this problem may be overcome by powering up the gigabit PHY in low power mode and then selectively enabling the gigabit PHY to operate in a mode where the power budget may be exceeded. Accordingly, firmware may be provided to power up the gigabit PHY in low power mode and then enable the PHY to operate in a mode that exceeds the power budget. In this regard, the firmware may configure the gigabit PHY so that its auto-negotiate function may be disabled at startup. An enable bit may be utilized to indicate when the gigabit PHY is operational. For example, a memory mapped enable bit may be asserted, which may indicate that the PHY is no longer in an un-initialized state. Accordingly, the firmware may be adapted to detect assertion of the enable bit and subsequently configure the gigabit PHY for auto-negotiation.

In another aspect of the invention, an interrupt signal may be generated by the gigabit PHY which may indicate that the gigabit PHY has transitioned from an un-initialized state to an initialized state. For example, a memory mapped enable change state interrupt may be provided to a CPU such as an internal CPU, or a MAC. In the latter case, prior to receiving an indication of the interrupt, the MAC may operate with a slow core clock speed. However, upon detecting that the gigabit PHY is out of the un-initialized state by receiving an indication of the interrupt, the MAC may wait for a short period, for example 40 µs, and then switch to a higher clock speed, for example, 62.5MHz.

In another aspect of the invention, if during a hard reset, there is no PCI main power, the single chip device may automatically configure the gigabit PHY to auto-negotiate to a slower rate such as 10/100 BaseT. This may allow a system having the single chip device to wake up after receiving a magic packet without drawing too much auxiliary power, Vaux, while in the D3 hot power management state.

Aspects of the invention may also provide for reducing current in instances when the main power goes away, the auxiliary power remains present, and/or when the power management may not be enabled to allow the firmware to reduce the single chip device power to, for example, the D3 cold or inactive power management state. The single chip device may comprise a detector and register, for example, a power state register. The detector may be adapted to detect the absence of main power and the register may be utilized to trigger a hard reset and also provide an indication of the hard reset state. The loss of power detection circuit may be an edge detector which may be adapted to selectively generate a hard reset when there is a loss of main power. Notwithstanding, in operation, once the detector detects the absence of main power, the register may generate a hard reset signal to the gigabit PHY which may configure the gigabit PHY to operate in a 10/100 mode and/or OOB WOL state. The detector and/or register may be part of a power interface control block, for example.

Certain aspects of the invention may also be adapted to support various software-directed power management (PM) modes, at least a portion of which may be peripheral component interconnect (PCI) power management (PM) compatible. Additionally, aspects of the invention may also support various peripheral component interconnect (PCI) variants such as PCI-X or PCI Express management modes. PCI Express power management (PM) may establish various link power management states that a PCI Express physical link may be allowed to enter, in response to either software-driven D-state transitions or active state link power management activities. Aspects of the invention may also support various active state link power management modes, which may be hardware driven. Accordingly, various power management modes may be provided for managing a PCI Express link via hardware. Exemplary link power states may include, fully active link state L0, standby state L0s, lower power standby state L1, staging point for power removal state L2/L3, low power sleep state L2, and an off state L3. A fully active link state may refer to an active state existing while the single chip device is fully powered. The fully active state may be utilized during active state power management.

A standby state may refer to a very low exit latency link state intended to reduce power wastage during short intervals of logical idle that may exist between link activities. The standby state may be utilized to provide power management support for PCI Express compliant devices, for example. In the case of the dual port integrated Ethernet controller, for example, in instances where a standby state is enabled for a link, active state power management associated with each port's transmitter may be adapted to transition the appropriate link direction to standby state after an idle period of the opposing port's reported standby exit latency state. In order to save power, the transmitter may be placed in an electrical idle state and/or a lock gating of at least the link layer logic may be activated.

The single chip device may initiate entry into the standby state on its transmitting lanes and may transition a transmit lane to the standby state if defined idle conditions are satisfied for a period of time not exceeding a short period, for example 7µs. Exemplary defined idle conditions may comprise, no transaction layer packet (TLP) pending for transmission over the link, no flow control (FC) credits available to transmit any transaction layer packets, or no data link layer packets (DLLPs) pending for transmission. The single chip device may then initiate exit from the standby state when it has a transaction layer packet or data link layer packet to transmit across the link.

The low power standby state may refer to a low exit latency that is intended to reduce power when a chip may be aware of a lack of outstanding requests for pending transactions. The low power standby state may be utilized in low power applications, for example, mobile platforms in order to optimize battery life. Accordingly, the transmitter may be placed in electrical idle state, both the data link layer and the transaction layer may be disabled, and the phase lock loop (PLL) may be shutdown. While each of these activities may be utilized to reduce power, the cumulative effect may result in a drastic reduction in consumed power.

Upon entering a low power standby state, the single chip device may block the scheduling of any transaction layer packets. Accordingly, the single chip device may wait until it receives a link layer acknowledgement for the last transaction layer packet it has previously sent. The single chip device may transmit a transaction layer packet if required by the data link layer rules and/or wait until it accumulates at least a minimum number of flow control credits required to send the largest possible packet for any flow control type. Accordingly, the single chip device may be adapted to issue a transaction layer packet after exiting a low power standby state. The single chip device may then initiate active state power management (ASPM) negotiation by sending a request on its transmit lanes. This request may be continuously sent by the single chip device until the single chip device receives a response from the upstream device. The single chip device may remain in a loop waiting for a response from the upstream agent and during this period, the single chip device may not initiate any other transaction layer transfers.

The single chip device may still have the capability to accept transaction layer packets and data link layer packets from the upstream component. The single chip device may also have the capability to respond with data link layer packets as required by the link layer protocol. In this regard, received transaction layer packets may be acknowledged before entering the low power standby state. If the chip for any reason may need to initiate a transfer on the link, if may first complete the transition to the low power standby state. Once in a lower power standby state, the chip may then exit the low power standby state to handle the transfer, assuming standby state is enabled and that the conditions for standby state entry are met. Components on either end of a Express link may initiate an exit from a low power standby state without requiring negotiation.

The staging point for a power removal state may prepare the PCI Express link for the removal of power and clock. The single chip device may be in a state where there is no PCI Express main power but auxiliary power is present. Whenever the single chip device is in such as state, the single chip device may start preparing to reduce the current being consumed. The single chip device may then initiate a message to exit the staging point for a power removal state. In order to conserve power, transceiver circuitry may be shutdown, PCI Express logic may be disabled, and the phase lock loop may be shutdown. However, the detection circuitry utilized to support the exit may remain active.

The low power sleep state may be adapted to facilitate reduction of power in order to accommodate the removal of the PCI main power with an auxiliary power support. In this regard, in order to save power, transceiver circuitry except detection circuitry may be shutdown, PCI Express logic may be disabled, and the phase lock loop may be shutdown.

In power off state, power and clock signals may be removed and no auxiliary power may be provided. Accordingly, to bring the device and its link back up, a boot sequence may be executed in which power and clock signals are reapplied and a reset sequence may be initiated.

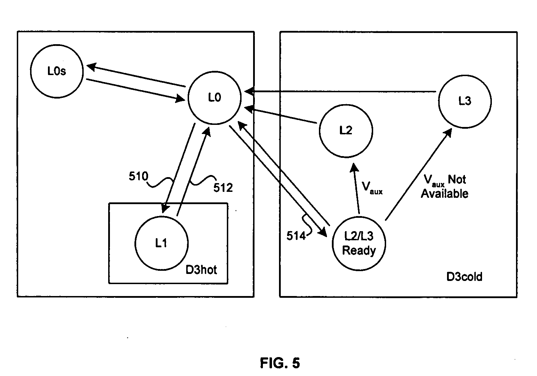

FIG. 5 is an flow diagram illustrating exemplary link power states or link states and corresponding transitions that may occur during the course of link operations, in accordance with an embodiment of the invention. Referring to FIG. 5, there is shown link power states L0s, L0, L1, L2, L3, and L2/L3 ready. Link states L2, L3 and L2/L3 ready may exists within a cold power management state, while link states L0s, L0 and L1 may exist in the hot power management state.

Transitions from link state L0 can only occur to link states L0s, L1 and L2/L3 ready. However transitions to link state L0 can occur from any of the states including L0s, L1, L2, L3 and L2/L3 ready. For example, a power management event, for example, PM_ENTER_L1 510 may cause a transition from link state L0 to link state L1. While in the power link state L1, a power management event, for example, PM_TURN_OFF, may cause a transition from link state L1 back to link state L0. A power management event, for example, PM_ENTER_L23 510 may cause a transition from state L0 to state L2/L3 ready.

In an embodiment of the invention, the PCI Express power management event (PME) mechanism may be software compatible with the PME mechanism defined by the PCI-PM specification. Power management events may be generated by the single chip device in order to request a power management state change such as waking from a non-communicating state and sending a PM-PME message to a PCI Express hierarchy. PM-PME messages may include the location of the requesting components or entity within the PCI Express hierarchy. Explicit identification within the PM-PME message may facilitate quicker PME service routine response and as a result a shorter resume time. The single chip device may utilize, for example, a WAKE# to re-establish power and reference clocks to the components or entities within its domain. Once WAKE# has been asserted, the single chip device may continue to drive a wake signal low, for example, until main power has been restored.

The single chip device may have to be notified prior to removal of the power management events reference clock and main power may be removed in order to prepare for resulting conditions. PCI Express power management may further comprise a fence mechanism that may be adapted to initiate the power removal sequence while also coordinating the operation of a power management controller and PME handling by PCI Express components or entities that may be coupled to the PCI Express bus or interface. Potential race conditions may exist when the single chip device initiates a PM-PME message while the power management is in the process of turning off the main power source to the PCI Express link hierarchy. However, a loss of power management event indication may result from turning off the main power. Notwithstanding, the fence mechanism is adapted to ensure that there is no loss of the power management event (PME) indication. The single chip device may be adapted to detect a PME turn-off message, for example, and as a result, the single chip device may reply with a PME acknowledgement such as a tum-off-ACK message. A PM-PME "Backpressure" deadlock avoidance mechanism may be provided which comprises a service timer that may expire after a certain time period, such as 100ms.

Transaction layer packets (TLPs) may be used to carry PM-PME messages that may be utilized to inform the power management software or handler which agent or entity within the PCI Express hierarchy is requesting a static power management change. The PM-PME messages, like at least some of the other power management system messages, may utilize a general purpose traffic class, TC #0. The single chip device may also comprise a PCI-PM power management controller (PMC) and power management control status registers (PMCSR) that may be PCI-PM compliant. At least one PME status bit and in the PMCSR configuration register may be utilized for power management control. In operation, when the single chip device initiates link wakeup or issues a PM-PME message, for example, the single chip device may assert or set the PME status bit in the power management control status register.

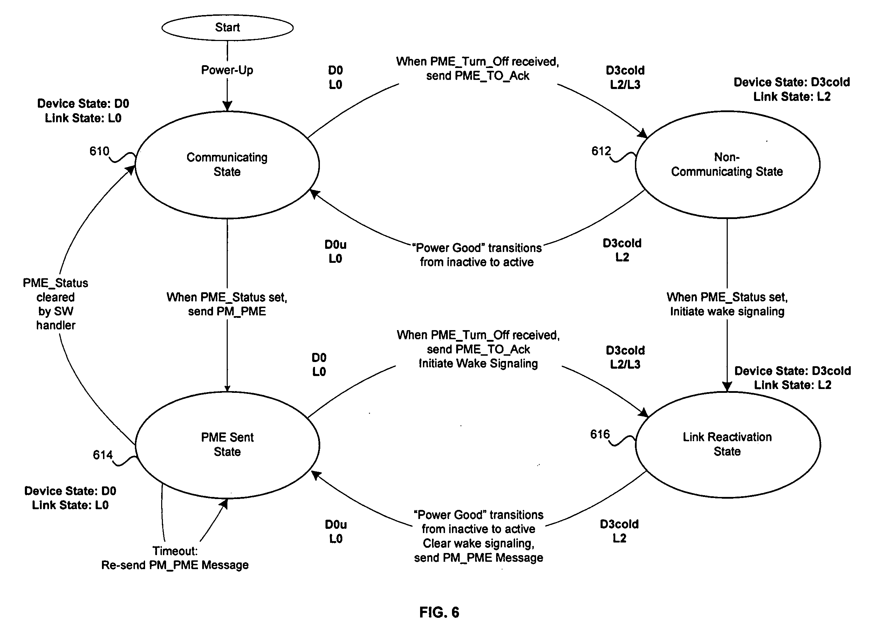

FIG. 6 is a block diagram of an exemplary PM-PME state machine, which may be utilized in connection with power management in a single chip device in accordance with an embodiment of the invention. In this regard, the exemplary power management - power management event (PM-PWE) state machine may be adapted to determine the ability of a link to service PME events by issuing PM-PME immediately versus requiring a link wakeup mechanism. The PM-PWE may be a finite state machine although the invention is not so limited. Referring to FIG. 6, there are shown four main link states 610, 612, 614 and 616.

Link state 610 may be referred to as a communicating state 610 and may be entered subsequent to a power-up of the single chip device. The communicating link state 610 may correspond to a device power management state D0 and a link state L0.

Link state 612 may be referred to as a non-communicating state 612. The communicating link state 612 may correspond to a device power management state D3cold and a link state L2. The D3cold state is an inactive state. Transitions may occur between the communicating state 610 and the non-communicating state 612. Additionally, a transition may occur from the non-communicating state to a link reactivation state 616.

Link state 614 may be referred to as a power management event (PME) sent state 614. The power management sent state 614 may correspond to an active device power management state D0 and a link state L0. Transitions may occur between the communicating state 610 and the power management event sent state 614 and between the link reactivation state 616.

Link state 616 may be referred to as a link reactivation state 616. The link reactivation state 616 may correspond to an inactive device power management state D3cold and a link state L0.

In operation, while in the communicating state 610, upon receipt of a turn off power management event, for example, PME_Turn_Off, a transition occurs from the communicating state to a non communicating state. In response to receiving the turn off power management event and/or transitioning to the non-communicating state 612, an acknowledgement, for example, a PME_TO_ACK may be sent to a host system. While in the non-communicating state 612, if an indication that the power is good or sufficient is received, then a transition may be made from the inactive non-communicating state 612 back to the active communicating state 610. While in the non-communicating state 612, if a power management event status, for example, PME_Status, is set, wake signaling may be initiated and a transition may occur from the non-communicating state 612 to the link reactivation state 616. While in the power management sent state 614, if the power management event status is cleared, then a transition may occur from the PME sent state 614 back to the communicating state. The power management event status may be asserted, de-asserted, enabled, disabled, cleared and/or set by a software handler such as an event handler, for example. More generally, the power management event status may be asserted, de-asserted, enabled, disabled, cleared and/or set by hardware, software, firmware or the likes.

While in the power management sent state 614, in instances where a timeout may occur, power management event messages may be resent. Furthermore, while in the power management sent state 614, if a power management event turn off is received, a transition may occur from the power management event sent state 614 to the link reactivation state 616. However, while in the link reactivation state 616, if the power is determined to be good or sufficient, then a transition may occur from the inactive link reactivation state 616 back to the active power management sent state 614. The wake signaling if present may be cleared and a power management event message may be sent to the host system.

In accordance with various embodiments of the invention, transitions may occur among consecutive power management states 610, 612, 614, 616, as dictated by the reference arrows. For example, the single chip device may transition from the non-communicating state 612 to the link-reactivation state 616, to the communicating state 610 via the PME sent state 614. In another example, the single chip device may transition from the non-communicating state 612 to the communicating state 610 and to the link reactivation state 616 via the PME sent state 614. When the single chip device is in the communicating state 610, by asserting and de-asserting the power management status, the single chip device may remain in the power management state 610.

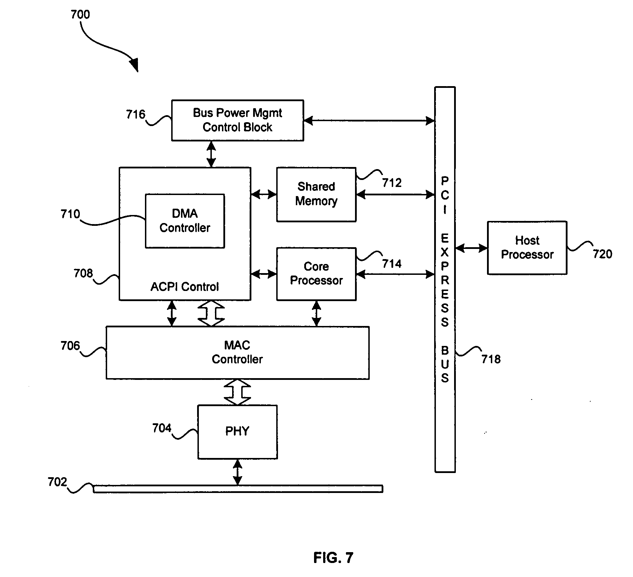

FIG. 7 is a block diagram of an exemplary system 700 that may be utilized in connection with power management in a single chip device in accordance with an embodiment of the invention. Referring to FIG. 7, there is shown a transport medium 702, a physical layer device (PHY) 704, a MAC controller 706, an advanced configuration and power interface (ACPI) control block 708, a shared memory block 712, a core processor 714, a bus power management block 716, a bus 718, and a host processor 720. The ACPI control block 708 may include, for example a DMA controller 710, and other functional component blocks.

The transport medium 702 may be an optical medium, electrical medium or a combination thereof. The PHY 704 may be gigabit PHY device which may be utilized for high speed communication at rates of the order of Gigabits. The MAC controller 706 may be adapted to handle MAC layer functions. The MAC layer functions handled by the MAC controller 706 may be part of the data link layer, layer 2, functions. In this regard, MAC controller 706 may be configured to implement, for example, the IEEE 802.11 ae Gigabit Ethernet protocol.

The ACPI control block 708 may be adapted to conform with the advanced configuration and power interface (ACPI) specification. The ACPI block 708 may be coupled to the MAC controller 706, the core processor 714, the shared memory 712 and the bus power management and control block 716. The ACPI control block 708 may contain suitable logic and/or circuitry that may be adapted to generate events and control transition between various power management states. In one aspect of the invention, the ACPI control block 708 may be implemented as a finite state machine (FSM), although the invention is not so limited.

The DMA Controller 710 may be any suitable direct memory access processor or controller that may be adapted to control read and write processes to the shared memory 712. The shared memory block 712 may be any dual port random access memory (DPRAM). The shared memory block may include one or more high speed memory devices that may be capable of handling the processing of data at Gigabit speeds. The shared memory block 712 may be memory mapped to facilitate access by one or more devices.

The core processor 714 may be any of a general class of microcontrollers or microprocessors and may be a standalone processor device or an embedded processor device such as a system-on-chip processor (SoC). One or more functions or applications may be executed by the core processor 714. For example, these functions or applications may be adapted to control the setting and clearing of the power management event status.

The bus 718 may be any suitable bus, for example, a PCI, PCI-X, PCI Express (New Card), CardBus, , Firewire or SCSI. The bus 718 may be adapted to provide interconnectivity for a plurality of devices coupled thereto. Accordingly, an arbitration and/or prioritization scheme may be provided to grant access to the bus by the various devices coupled to the bus. For example, an interrupt driven scheme may be utilized to grant bus access and/or provide inter-device communication.

The host processor 720 may be coupled to the bus 718. The host processor 720 may be any of a class of general or special purpose microprocessor or microcontroller that may be adapted to communicate with one or more devices that may be coupled to the bus 718. One or more applications or functions may be executed by the host processor 720. An operating system may be executed by the host processor 720. Additionally, one or more software applications may be adapted to receive and process power management events such as power management events for a particular device coupled to the bus 718, or for the host system. The host processor may be memory mapped to facilitate access to the shared memory block 712. A power management event handler may be implemented as a software application.

The bus power management block 716 may be coupled to the ACPI block 708 and may be adapted to generate various power management events to one or more devices coupled to the bus 718. The bus power management block 716 may include suitable logic and/or circuitry that may be configured to generate these power management events.

The system 700 may be utilized to implement a finite state machine that may control transitions among states of the finite state machine. While in a communicating state, the finite state machine may determine internally from within the single chip device whether a power management status is set and/or whether a first power management event is received. The first power management event may be a turn off power management event. If the power management status is set, the finite state machine may transition from the communicating state to a power management event sent state. The finite state machine may transition from the communicating state to a non-communicating state if the first power management event is received. If the power management status is set, it may be cleared in order to facilitate a transition back to the communicating state by the finite state machine. The system may comprise at least one power management control register that may be utilized for indicating the power management status.

The finite state machine may transition to a link reactivation state in response to receiving a second turn off power management event while in the power management event sent state. Additionally, in response to receiving the second turn off power management event while in the power management event sent state, wake signaling may be initiated and/or an acknowledgement may be sent to a host by the finite state machine. The finite state machine may transition to the power management event sent state from the link reactivation state whenever sufficient power is received. The finite state machine may also be adapted to transition from the non-communicating state back to the communicating state whenever sufficient power is received. While in the non-communicating state, the finite state machine may transition to the link reactivation state when the power management status is set. However, if a timeout occurs while in the power management event sent state, the finite state machine may be adapted to resend at least one power management event.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for managing power in a single chip device, the method comprising:
while in a communicating state, determining internally from within the single chip device at least one of:
whether a power management status is set; and
whether a first power management event is received;
if said power management status is set, transitioning to a power management event sent state; and
if said first power management event is received, transitioning to a non-communicating state.

2. The method according to claim 1, wherein said first power management event is a turn off power management event.

3. The method according to claim 1 or 2, further comprising clearing said set power management status.

4. The method according to claim 3, further comprising transitioning back to said communicating state from said power management event sent state upon said clearing of said set power management status.

5. The method according to any of the preceding claims, further comprising in response to receiving a second turn off power management event while in said power management event sent state, transitioning to a link reactivation state.

6. A machine-readable storage having stored thereon, a computer program having at least one code section for managing power in a single chip device, the at least one code section being executable by a machine for causing the machine to perform steps comprising:
while in a communicating state, determining internally from within the single chip device at least one of:
whether a power management status is set; and
whether a first power management event is received;
if said power management status is set, transitioning to a power management event sent state; and
if said first power management event is received, transitioning to a non-communicating state.

7. The machine-readable storage according to claim 6, wherein said first power management event is a turn off power management event.

8. The machine-readable storage according to claim 6 or 7, further comprising code for clearing said set power management status.

9. A system for managing power in a single chip device, the system comprising:
a finite state machine that, while in a communicating state, internally determines from within the single chip device at least one of:
whether a power management status is set; and
whether a first power management event is received;
if said power management status is set, said finite state machine transitioning to a power management event sent state; and
said finite state machine transitioning to a non-communicating state, if said first power management event is received.

10. The system according to claim 9, wherein said first power management event is a turn off power management event.
